(19)

Europäisches
Patentamt
European
Patent Office
Office européen
des brevets

(11)  **EP 2 012 315 A1**

(12)  **EUROPEAN PATENT APPLICATION**

(43) Date of publication:
  **07.01.2009 Bulletin 2009/02**

(51) Int Cl.:
  **G11B 7/09** *(2006.01)*    **G11B 7/135** *(2006.01)*

(21) Application number: **07110447.5**

(22) Date of filing: **18.06.2007**

<table>
<tr><td>

(84) Designated Contracting States:
  **AT BE BG CH CY CZ DE DK EE ES FI FR GB GR HU IE IS IT LI LT LU LV MC MT NL PL PT RO SE SI SK TR**
  Designated Extension States:
  **AL BA HR MK RS**

(71) Applicant: **Deutsche Thomson OHG**
  **30625 Hannover (DE)**

</td><td>

(72) Inventors:
  • **Strauch, Frank**
    **53757 St. Augustin (DE)**
  • **Khrushchev, Sergey**
    **78048, Villingen-Schwenningen (DE)**

(74) Representative: **Schmidt-Uhlig, Thomas**
  **Deutsche Thomson OHG**
  **European Patent Operations**
  **Karl-Wiechert-Allee 74**
  **30625 Hannover (DE)**

</td></tr>
</table>

(54)  **Astigmatism generating element for an apparatus for reading from and/or writing to optical recording media**

(57)    The present invention relates to an astigmatism generating element (9) for an apparatus for reading from and/or writing to optical recording media (7), and more specifically to an astigmatism generating element (9) for use in an apparatus having two light sources (2). According to the invention, the astigmatism generating element (9) is a focusing lens (9) having a cylindrical surface (9b) and a spherical surface (9a).

$$\frac{1}{f_0} > 0$$

$$\frac{1}{f_{45}} = 0$$

$$\frac{1}{f_{90}} < 0$$

**Fig. 4**

EP 2 012 315 A1

**Description**

The present invention relates to an astigmatism generating element for an apparatus for reading from and/or writing to optical recording media, and more specifically to an astigmatism generating element for use in an apparatus having two light sources.

Today a plurality of formats of optical recording media exist, e.g. CD (Compact Disk), DVD (Digital Versatile Disk) and BD (BluRay Disk) or HD-DVD (High-Density Digital Versatile Disk). These formats require different wavelengths for reading/recording. In an apparatus capable of reading from and/or writing to two or more types of optical recording media, TWIN laser diodes are often used to generate at least two of the necessary light beams. In a TWIN laser diode two laser diodes are mounted side by side in a common housing. A de-facto standard for the distance between these two laser diodes is 110$\mu$m. A special photo detector with separate detector areas for the two light beams is generally used in combination with a TWIN laser diode.

A well known method for focus control of an objective lens in an apparatus for reading from and/or writing to optical recording media is the so-called astigmatism method. For this method an astigmatism generating optical element is placed in the convergent beam before a photo detector, which introduces astigmatism into the light beams. In a single wavelength apparatus a cylindrical lens is often used for this purpose. A known solution in a dual wavelength apparatus is a semi-transparent mirror inclined by 45° relative to the beam path. However, as the index of refraction of the material of the mirror substrate depends on the wavelength, the two light beams are refracted by different angles. Depending on the thickness and the material of the semi-transparent mirror, as well as on the inclination by +45° or -45°, the distance of the two light beams on the photo detector deviates from the 110$\mu$m distance. Thickness tolerances of the semi-transparent mirror are in the range of 0.1mm, which leads to typical distances of the two light beams in the range from 107$\mu$m to 112$\mu$m. Though this problem could be alleviated by tighter tolerances, a further problem are wavelength shifts of the light sources. Such shifts also lead to deviations from the 110$\mu$m distance. Due to the sensitivity of the photo detector even very small deviations in the range of 1$\mu$m disturb the electrical balance of the four quadrants of each detector area of the photo detector. As a consequence the photo detector has to be designed for the specific situation. A further difficulty arises as the semi-transparent mirror also introduces coma into the light beams besides the desired astigmatism. This coma leads to axially asymmetric beam intensity profiles. Therefore, for determining the center of a light beam it is no longer sufficient to consider the optical axis. Instead, all rays of the light beam have to be taken into account. In view of the necessary accuracy in the magnitude of micrometers this may cause misadaptations of the photo detector.

It is an object of the invention to propose a solution for achieving a predefined distance between the two light beams upon imaging on a photo detector.

According to the invention, this object is achieved by an astigmatism generating element for use in an apparatus for reading from and/or writing to an optical recording medium, which is a focusing lens with a cylindrical surface and a spherical surface. In this focusing lens the spherical surface compensates for a converging effect of the cylindrical surface. The invention proposes a special focusing lens for an apparatus for reading from and/or writing to optical recording media, which is located before the photo detector and serves as an astigmatism generating element. One surface of the lens has a spherical shape, while the other surface has a cylindrical shape. By way of a 1:1 imaging of the light source onto the photo detector the distance of 110$\mu$m is maintained on the photo detector. For this purpose the focusing lens is designed such that the beam divergence is kept constant, i.e. the beam divergence before and after the focusing lens has the same value. This has the further positive effect that a displacement of a focusing lens along the optical axis does not influence the focus offset, but only the spot diameter on the photo detector. This makes the arrangement very insensitive to thermal influences on the focusing lens.

Advantageously, the radius $R_{sph}$ of the spherical surface and the radius $R_{cyl}$ of the cylindrical surface are

connected by $2 \cdot R_{cyl} + R_{sph} = \dfrac{n-1}{n} \cdot d$ , , where n is the refraction index and d is the thickness of the focusing lens.

This relation of the radii is a good approximation for a thin focusing lens. For a larger thickness d, the radius $R_{sph}$ of the

spherical surface and the radius $R_{cyl}$ of the cylindrical surface are preferably connected by $\dfrac{2 \cdot R_{cyl}}{R_{sph}} = \dfrac{d}{n \cdot e} - 1$ , where

e is the distance between a virtual source and the spherical surface of the lens.

Preferably, an astigmatism generating element according to the invention is used in an apparatus for reading from and/or writing to optical recording media. This is especially advantageous in an apparatus where the pickup includes a TWIN laser diode.

For a better understanding the invention shall now be explained in more detail in the following description with reference to the figures. It is understood that the invention is not limited to this exemplary embodiment and that specified features can also expediently be combined and/or modified without departing from the scope of the present invention. In the figures:

Fig. 1    shows a prior art optical pickup with a TWIN laser diode;

Fig. 2    illustrates a photo detector with separate detector areas for the two light beams of the TWIN laser diode;

Fig. 3    shows an optical pickup with an astigmatism generating focusing lens according to the invention;

Fig. 4    illustrates a focusing lens according to the invention with $R_{sph}$=-10mm and $R_{cyl}$=+5mm;

Fig. 5    defines the distance e of the focusing lens in the absence of an object via a virtual object and half divergence angles $\alpha$ and $\alpha'$,

Fig. 6    shows plots of $1/R_{sph}$ versus the lens thickness d for various radii of curvature $R_{cyl}$ of the lens;

Fig. 7    shows a plot of a half divergence angle against $R_{cyl}$;

Fig. 8    depicts a plot of the image of the TWIN distance against $R_{cyl}$; and

Fig. 9    shows a plot of the focus offset caused by a 0.5mm lens displacement against $R_{cyl}$.

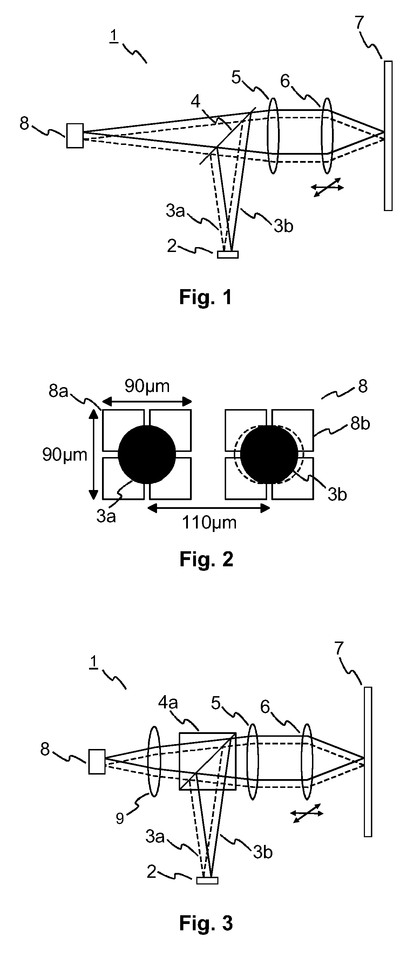

Fig. 1 shows a prior art optical pickup 1 with a TWIN laser diode 2. The TWIN laser diode 2 emits a first light beam 3a and a second light beam 3b. The light beams 3a, 3b are deflected by a half-mirror 4 in the direction of an optical recording medium 7 and collimated with the aid of a collimator lens 5. By means of a movable objective lens 6, the light beams 3a, 3b are focused onto a data track situated on the optical recording medium 7. The objective lens 6 can be moved by an actuator (not shown) in the direction of the optical recording medium 7 and also perpendicularly to the data track in order to keep the focus of the light beams 3a, 3b exactly on the track. The reflected light beams 3a, 3b, which are modulated in accordance with the data stored in the track, are collimated by the objective lens 6 and focused onto a photo detector 8 by the collimator lens 5, passing through the half-mirror 4 in the process. The photodetector 8 has a plurality of detector areas separated by separating lines. The signals of said elements are used to determine, on the one hand, the stored data and, on the other hand, a focus error signal and a track error signal for controlling the actuator.
A photo detector 8 with separate detector areas 8a, 8b for the two light beams 3a, 3b of the TWIN laser diode 2 is shown in Fig. 2 (not to scale). The dashed circles in Fig. 1 illustrate the results of distance deviations on the photo detector 8. As can be seen, at least one of the light beams 3b is no longer centered on the corresponding detector area 8b. This leads to a disturbance of the electrical balance of the four quadrants the detector area 8b.
A pickup 1 using an astigmatism generating focusing lens 9 according to the invention is shown in Fig. 3. Similarly to the pickup 1 of Fig. 1, the light beams 3a, 3b emitted by the light source 2 are collimated by the collimator lens 5 after being deflected towards the optical recording medium 7 by a beam splitter cube 4a. They are then focused onto the optical recording medium 7 by the objective lens 6. The reflected light beams 3a, 3b are collimated by the objective lens 6 and focused onto the photodetector 8 by the collimator lens 5 and an additional focusing lens 9 situated behind the beam splitter cube 4a.

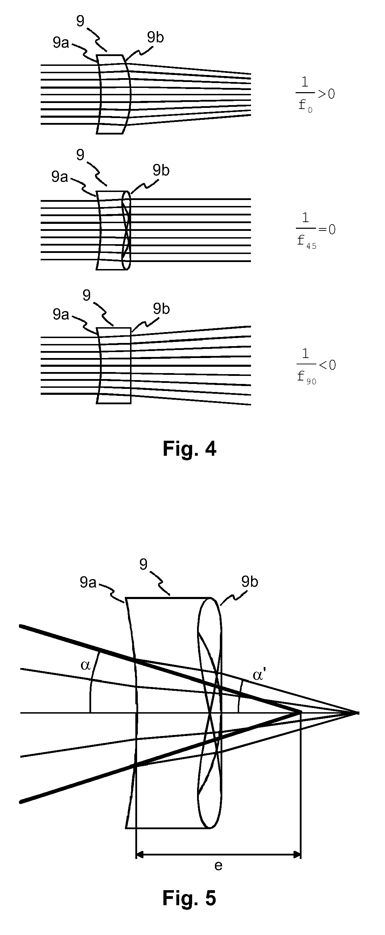

In Fig. 4 an exemplary astigmatism generating focusing lens 9 according to the invention is illustrated. A cylindrical focus lens, which is principally known for generating astigmatism in an optical pickup, is adapted for a pickup design using a TWIN laser diode. The condition of a 1:1 imaging, which is equivalent to a conservation of the beam divergence, results in a special lens design. The cylindrical surface 9b for generating astigmatism is optically compensated for by a spherical surface 9a. This is possible, for example, by using a convex cylindrical surface 9b and a concave spherical surface 9a. The lens design is determined with the help of the so-called lens maker's formula

$$\frac{1}{f} = (n-1)\cdot\left(\frac{1}{R_{cyl}} + \frac{1}{R_{sph}} - \frac{(n-1)\cdot d}{n\cdot R_{cyl}\cdot R_{sph}}\right), \qquad (1)$$

where $R_{cyl}$ and $R_{sph}$ are the radii of curvature, n is the refraction index, and d is the thickness of the lens. A positive R is used for converging lenses, whereas a negative R is used for diverging lenses. In Fig. 4 the compensating effect of the focusing lens is illustrated by three cuts through the lens:

a) Parallel to the drawing plane of the pickup of Fig. 3 (0°), the lens has a converging effect.
b) At 45°, which is the way the lens is mounted in the pickup, the lens has no imaging effect.
c) Perpendicular to the drawing plane of the pickup of Fig. 3 (90°), the lens has a diverging effect.

Mathematically, the superposition of the parallel and the perpendicular orientation of the cylindrical surface 9b, i.e.

$$\frac{1}{f_0} = -\frac{1}{f_{90}}, \qquad (2)$$

results with the help of the lens maker's formula in the following relation of the radii:

$$2 \cdot R_{cyl} + R_{sph} = \frac{n-1}{n} \cdot d . \qquad (3)$$

It should be noted that $R_{cyl}$ is the radius of the cylindrical surface 9b independent of the chosen coordinate system. The remaining degree of freedom for the choice of the radii is reduced by the determination of the spot size on the detector. Practically, the radius values differ from the theoretical values obtained through the above formula in case of a larger thickness d of the lens. This is surprising because the lens maker's formula already contains the thickness. However, the correct result is obtained by a matrix optical treatment of the beam divergence $\alpha$. It is known from text books that the divergence of the imaged beam is given by

$$\alpha' = \alpha \cdot \left( 1 - \frac{e}{f} + \frac{n-1}{n} \cdot \frac{d}{R_{cyl}} \right), \qquad (4)$$

where e is the distance between a virtual source and the first surface of the lens. The special case $d/R_{cyl} \approx 0$ corresponds to the situation illustrated in Fig. 4. For f=oo the distance does not matter and the beam divergence is conserved.

The actual situation of the focusing lens 9 is illustrated in Fig. 5. The conservation of the beam divergence is then expressed as $(\alpha_0' + \alpha_{90}') / 2 = \alpha$. This corresponds to a cartesian decomposition of the 45° system. By inserting equation (4) into this expression the following radius condition is derived:

$$2 \cdot R_{cyl} = R_{sph} \cdot \left( \frac{d}{n \cdot e} - 1 \right) + \frac{n-1}{n} \cdot d . \qquad (5)$$

For large distances the already known formula (3) is obtained. Because of $d/R_{sph} \approx 0$ one obtains for small distances

$$\frac{2 \cdot R_{cyl}}{R_{sph}} = \frac{d}{n \cdot e} - 1 . \qquad (6)$$

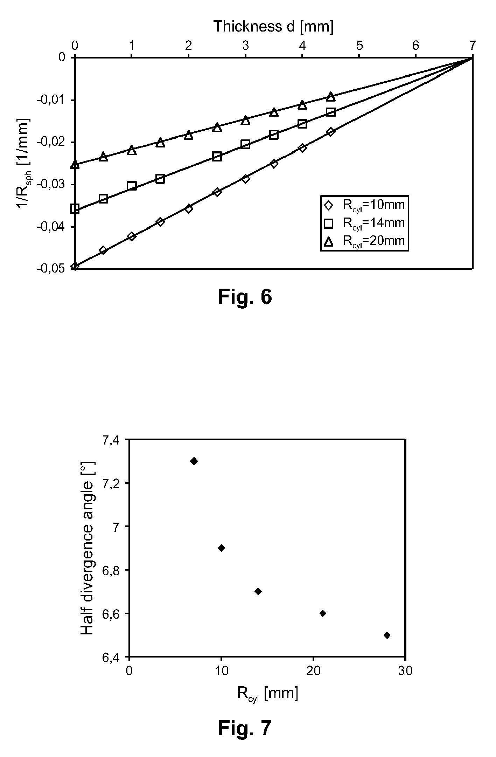

This result was tested for various radii of curvature $R_{cyl}$ of the lens. Plots of $1/R_{sph}$ versus d are shown in Fig. 6. The fitted slopes yield n.e=7mm, in good accordance with the simulation. Note that the distance is measured from the first surface to the virtual source, which is the focus of the converging ray fan without lens (compare Fig. 5).

In the following a special focusing lens with $R_{sph}$=-35mm, $R_{cyl}$=14mm, d=1.5mm and n.e=7mm, which solves the above formula, shall be discussed. This focusing lens was included in a real pickup design. Some results obtained by ray tracing are given in Figs. 7 to 9 for a series of $R_{cyl}$ values.

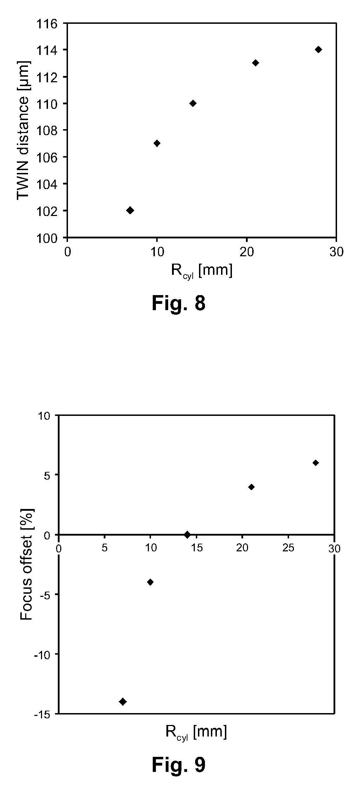

Fig. 7 shows a plot of the half divergence angle α' against $R_{cyl}$, whereas Fig. 8 depicts a plot of the image of the TWIN distance against $R_{cyl}$. In the nominal lens position the universal TWIN distance of 110μm on the detector is only found for the special focus lens. Each respective value of TWIN distance and divergence is kept under a displacement of the focusing lens of 0.5mm, because this value is small against the distance e.

In Fig. 9 an examination of the more sensitive focus offset, i.e. the amount of re-adjustment of the objective lens 6 necessary if the focusing lens 9 is displaced is illustrated. The amount of re-adjustment is expressed in percentage of the S-curve length, which is approximately 5μm. The simulation shows that this value keeps zero only for the focusing lens according to the invention. This is a remarkable property of the lens, which helps to create pickups that are more stable against displacements induced by thermal influences, for example.

## Claims

1. Astigmatism generating element (9) for use in an apparatus for reading from and/or writing to an optical recording medium (7), **wherein** the astigmatism generating element (9) is a focusing lens (9) having a cylindrical surface (9b) and a spherical surface (9a).

2. Astigmatism generating element (9) according to claim 1, **wherein** the spherical surface (9a) compensates for a converging effect of the cylindrical surface (9b).

3. Astigmatism generating element (9) according to claim 2, **wherein** the radius $R_{sph}$ of the spherical surface (9a) and the radius $R_{cyl}$ of the cylindrical surface (9b) are connected by $2 \cdot R_{cyl} + R_{sph} = \dfrac{n-1}{n} \cdot d$, where n is the refraction index and d is the thickness of the focusing lens (9).

4. Astigmatism generating element (9) according to claim 2, **wherein** the radius $R_{sph}$ of the spherical surface (9a) and the radius $R_{cyl}$ of the cylindrical surface (9b) are connected by $\dfrac{2 \cdot R_{cyl}}{R_{sph}} = \dfrac{d}{n \cdot e} - 1$, where n is the refraction index, d is the thickness of the focusing lens (9), and e is the distance between a virtual source and the spherical surface (9a) of the lens (9).

5. Apparatus for reading from and/or writing to an optical recording medium (7), with a light source (2) for emitting a first light beam (3a) and a second light beam (3b), an objective lens (6) for focusing the light beams (3a, 3b) onto the optical recording medium (7), a photo detector (8) for detecting the light beams (3a, 3b) reflected by the optical recording medium (7), and an astigmatism generating element (9) for generating astigmatism in the reflected light beams (3a, 3b), **wherein** the astigmatism generating element (9) is a focusing lens (9) having a cylindrical surface (9b) and a spherical surface (9a).

6. Apparatus according to claim 5, **wherein** the spherical surface (9a) compensates for a converging effect of the cylindrical surface (9b).

7. Apparatus according to claim 6, **wherein** the radius $R_{sph}$ of the spherical surface (9a) and the radius $R_{cyl}$ of the cylindrical surface (9b) are connected by $2 \cdot R_{cyl} + R_{sph} = \dfrac{n-1}{n} \cdot d$, where n is the refraction index and d is the thickness of the focusing lens (9).

8. Apparatus according to claim 6, **wherein** the radius $R_{sph}$ of the spherical surface (9a) and the radius $R_{cyl}$ of the cylindrical surface (9b) are connected by $\dfrac{2 \cdot R_{cyl}}{R_{sph}} = \dfrac{d}{n \cdot e} - 1$, where n is the refraction index, d is the thickness of the focusing lens (9), and e is the distance between a virtual source and the spherical surface (9a) of the lens (9).

9. Apparatus according to one of claims 5 to 8, **wherein** the light source (2) is a TWIN laser diode.

**Fig. 1**

**Fig. 2**

**Fig. 3**

$$\frac{1}{f_0} > 0$$

$$\frac{1}{f_{45}} = 0$$

$$\frac{1}{f_{90}} < 0$$

**Fig. 4**

**Fig. 5**

**Fig. 6**

**Fig. 7**

**Fig. 8**

**Fig. 9**

**European Patent Office**

# EUROPEAN SEARCH REPORT

Application Number

EP 07 11 0447

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/31823 A (KONINKL PHILIPS ELECTRONICS NV [NL]) 18 April 2002 (2002-04-18) <br> * page 6, line 1 - page 7, line 22 * <br> ----- | 1-9 | INV. <br> G11B7/09 <br> G11B7/135 |
| X | US 2003/048736 A1 (TAKAHASHI YOSHITAKA [JP] ET AL) 13 March 2003 (2003-03-13) <br> * paragraph [0164] - paragraph [0179] * <br> ----- | 1-9 | |
| X | US 2006/140078 A1 (NAGATOMI KENJI [JP] ET AL) 29 June 2006 (2006-06-29) <br> * paragraph [0074] - paragraph [0076] * <br> * figure 10 * <br> ----- | 1-9 | |
| X | WO 00/39791 A (KONINKL PHILIPS ELECTRONICS NV [NL]) 6 July 2000 (2000-07-06) <br> * page 10, line 19 - page 10, line 26 * <br> * figure 10 * <br> ----- | 1-9 | |
| X | US 2004/081058 A1 (NAGATOMI KENJI [JP] ET AL) 29 April 2004 (2004-04-29) <br> * the whole document * <br> ----- | 1-9 | TECHNICAL FIELDS SEARCHED (IPC) <br><br> G11B |

The present search report has been drawn up for all claims

| Place of search | Date of completion of the search | Examiner |
|---|---|---|
| The Hague | 24 August 2007 | BREZMES ALONSO, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 11 0447

This annex lists the patent family members relating to the patent documents cited in the above-mentioned European search report.
The members are as contained in the European Patent Office EDP file on
The European Patent Office is in no way liable for these particulars which are merely given for the purpose of information.

24-08-2007

| Patent document cited in search report | | Publication date | Patent family member(s) | | Publication date |
|---|---|---|---|---|---|
| WO 0231823 | A | 18-04-2002 | JP<br>US | 2004511875 T<br>2002060975 A1 | 15-04-2004<br>23-05-2002 |
| US 2003048736 | A1 | 13-03-2003 | NONE | | |
| US 2006140078 | A1 | 29-06-2006 | CN | 1831975 A | 13-09-2006 |
| WO 0039791 | A | 06-07-2000 | JP<br>US | 2002533864 T<br>6473386 B1 | 08-10-2002<br>29-10-2002 |
| US 2004081058 | A1 | 29-04-2004 | CN | 1499500 A | 26-05-2004 |

EPO FORM P0459

For more details about this annex : see Official Journal of the European Patent Office, No. 12/82